## Europäisches Patentamt
## European Patent Office
## Office européen des brevets

(19)

(11) Publication number: **0 041 066**
**B1**

(12) **EUROPEAN PATENT SPECIFICATION**

(45) Date of publication of patent specification: **09.11.83**

(51) Int. Cl.³: **A 01 F 12/30**

(21) Application number: **80901654.6**

(22) Date of filing: **06.08.80**

(86) International application number:
**PCT/EP80/00072**

(87) International publication number:
**WO 81/00502 05.03.81 Gazette 81/6**

(54) **GRAIN SEPARATING MECHANISM.**

(30) Priority: **14.08.79 GB 7928253**

(43) Date of publication of application:
**09.12.81 Bulletin 81/49**

(45) Publication of the grant of the patent:
**09.11.83 Bulletin 83/45**

(84) Designated Contracting States:
**DE FR SE**

(56) References cited:
**DE - A - 2 424 520**
**DE - A - 2 741 298**
**DE - B - 1 155 627**
**DE - C - 460 501**
**FR - A - 2 298 932**
**FR - A - 2 312 190**
**FR - A - 2 330 306**
**US - A - 1 533 963**

(73) Proprietor: **MASSEY-FERGUSON SERVICES N.V.**
**Abraham de Veerstraat 7A**
**Curaçao Netherlands Antilles (NL)**
(84) **DE SE**
(73) Proprietor: **MASSEY-FERGUSON S.A.**
**La Boursidiere, RN 186**
**F-92350 le Plessis Robinson (FR)**
(84) **FR**

(72) Inventor: **VAN DEST, Jean Claude**
**27 chemin du Renard**
**Saintry-sur-Seine F-91100 (FR)**

(74) Representative: **Jones, David Bryn**
**Patent and Trade Marks Department**
**Massey-Ferguson**
**Stareton, near Kenilworth Warwickshire CV8 2LJ**
**(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Grain separating mechanism

*Technical Field*

This invention relates to grain separating mechanisms of the type known as straw walkers comprising a number of longitudinally extending members that are provided with crop engaging formations along their upper edges and are oscillated longitudinally to move crop rearwards along their length.

Commonly known straw walkers have longitudinal members each with a plurality of steps formed along its upper edge so that each step rises gradually towards the rear and then drops sharply. Each gradually rising edge is also formed with a saw-tooth profile with the short edges facing rearwards. These short edges and the longer edges at the drops in the steps serve to engage the crop and move it rearwards as the longitudinal members are oscillated longitudinally. Furthermore, the oscillating movement and dropping of the crop over the steps helps to agitate the crop and free loose grain from it.

It is also known to agitate the crop further by providing means to move it laterally on the straw walkers. For example, fingers have been provided on a transverse shaft above the straw walkers so that they are inclined relative to planes normal to the shaft axis and thus oscillate transversely as the shaft is rotated. A disadvantage with this arrangement is that it is above the crop and thus tends to compress the crop as it is fed past beneath it.

Another known device has fingers that project rearwardly from the drops in the steps of the straw walkers and which are oscillated transversely beneath the crop to agitate it as it falls over each step. However, an additional drive is provided to oscillate these fingers and this has increased the complexity and cost of the straw walkers. A device of this type is shown in French Patent Specification No. 2 330 206.

*Disclosure of the Invention*

An object of the present invention is to provide a straw walker with inexpensive means to agitate the crop by lateral horizontal movement.

According to the invention, a grain separating mechanism suitable for use in a combine harvester comprises a number of longitudinally extending crop support members that are provided with crop engaging formations along their upper edges and are oscillated longitudinally to move crop rearwards along their length, and a number of elongate crop agitation members each of which is connected to the crop support members so as to project longitudinally therefrom beneath the crop characterised in that each crop agitation member is adapted so that it resonates with a lateral movement in response to longitudinal oscillation of the crop support members.

Preferably, the crop agitation members are resilient sheet members that are fixed at one end to the crop support members so that the lateral movement is normal to the side faces of the sheet member.

Preferably, each resilient crop agitation member is inclined slightly from the vertical plane and is loaded by a mass at its free end so as to enhance its resonant movement.

*Description of Drawings*

The invention will now be described by way of example with reference to the accompanying drawings in which:

Figure 1 is a shematic side elevation of a combine harvester threshing and separating mechanism including straw walkers according to the invention,

Figure 2 is an end view of the straw walkers of Figure 1, and

Figure 3 is a curve showing the amplitude — frequency characteristic for the resonant agitating springs connected to the straw walkers in Figures 1 and 2.

*Best Mode of Carrying Out Invention*

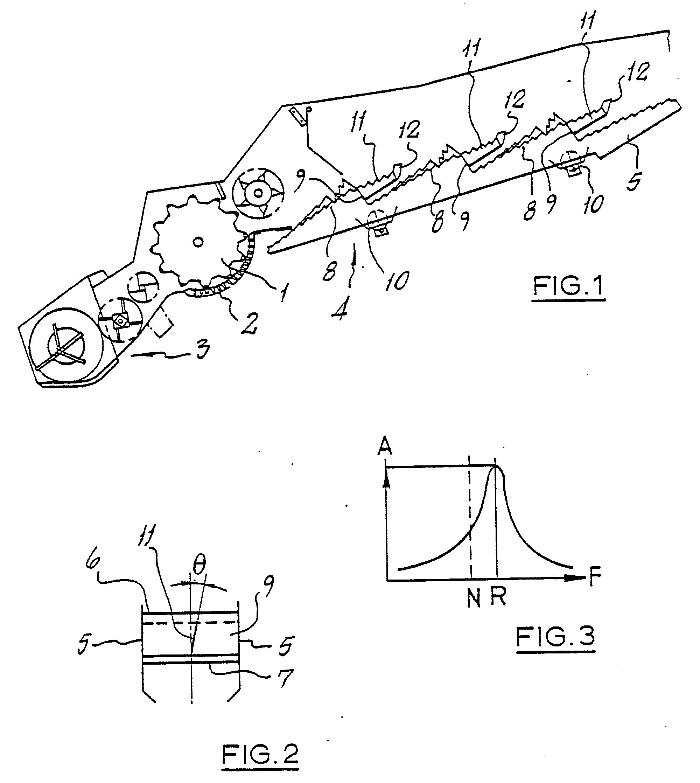

The threshing mechanism illustrated in Figure 1 comprises a threshing cylinder 1 that cooperates with an open grate concave 2 beneath it to thresh crop fed to it from a combine table 3. This mechanism is not relevant to the present invention and therefore it will not be described in any further detail.

Threshed crop from the rear of the cylinder 1 is fed onto straw walkers 4 that are of substantially conventional construction each comprising a pair of rearwardly extending vertical plates 5 arranged alongside one another and connected by upper sieve plates 6 and a lower grain collecting floor 7. The upper edges of the vertical plates 5 are formed with a series of steps that rise gradually rearwards and then drop sharply. A sieve plate 6 extends the length of each rising edge 8 of the steps and an end plate 9 is provided at each drop in the steps.

A saw-tooth is formed along the rising edges 8. The saw tooth edges and drops in the steps engage the underside of the crop and feed it rearwards as the straw walkers are oscillated longitudinally by the action of crank drive mechanisms 10 on which the straw walkers are mounted.

According to the invention, resonant agitating means 11 are mounted on the straw walkers so as to extend beneath the crop and agitate it by oscillating laterally in horizontal directions. Each agitating means comprises a sheet metal spring that is connected to the end plate 9 at the drop in a step so as to project rearwards above the rising portion of the next step. The spring 11 lies in an upright plane that is inclined from the vertical, as shown in Figure 2. Preferably the upright plane of the spring 11 is inclined from the vertical by less than 45°.

Typically, the inclination $\theta$ is 15° from the vertical. The upper edge of the spring 11 is located so as to form a continuation of the rising edge 8 of the step, as seen in side elevation, and is similarly formed with a saw-tooth. A mass 12 is secured to the free end of the spring 11.

The inclination of the spring 11 and the loading by mass 12 ensures that it oscillates laterally in response to normal oscillation of the straw walkers. These parameters and others, such as spring dimensions and resilience, determine the resonant frequency of the springs. Preferably, this resonant frequency R is predetermined to be just above the frequency of oscillation of the straw walkers N (See Figure 3) so as to allow for the damping effect of the crop on the springs in use. In this way, the resonant frequency of the springs can be made to approach the frequency of oscillation of the straw walkers in use so that the springs have a maximum agitation effect.

As shown in the drawings, the springs 11 are all of the same length. However, it will be appreciated that they can be made of different lengths so that the agitation effect is more fully distributed along the straw walkers. Even with different length springs 11, the resonant frequency of each can be made the same by adjustment of other parameters, for example, the mass 12.

## Claims

1. A grain separating mechanism suitable for use in a combine harvester comprising a number of longitudinally extending crop support members that are provided with crop engaging formations along their upper edges and are oscillated longitudinally to move crop rearwards along their length, and a number of elongate crop agitation members each of which is connected to the crop support members so as to project longitudinally therefrom beneath the crop characterised in that each crop agitation member (11) is rigidly connected to a crop support member (4) and is resilient so that it resonates with a lateral movement in response to longitudinal oscillation of the crop support members (4).

2. A grain separating mechanism as claimed in claim 1 further characterised in that each of said crop agitation members (11) comprises a resilient sheet member that is fixed at one end to the crop support members (4) so that said lateral movement is normal to the side faces of the sheet member (11).

3. A grain separating mechanism as claimed in claim 2 further characterised in that one longitudinal edge of the sheet member (11) is uppermost so that said lateral movement has at least a horizontal component.

4. A grain separating mechanism as claimed in claim 3 further characterised in that the sheet member (11) lies in a plane that is inclined from the vertical by less than 45°.

5. A grain separating mechanism as claimed in any one of claims 2 to 4 further characterised in that the free end of said resilient sheet member (11) is loaded (12) to enhance said resonance.

6. A grain separating mechanism as claimed in any one of the preceding claims further characterised in that the natural frequency of oscillation of each of the crop agitation members (11) is determined to be slightly higher than the frequency of oscillation of the crop support members (4) so that the two frequencies more closely coincide when the mechanism is loaded with crop.

7. A grain separating mechanism as claimed in any one of the preceding claims further characterised in that each crop agitation member (11) is provided with a formation (8, 9) along its upper edge to aid rearwards movement of the crop when it oscillates longitudinally.

8. A grain separating mechanism as claimed in any one of the preceding claims further characterised in that one or more crop support members (4) is formed with one or more steps (9) along its length so that crop falls over each step as it moves rearwards, each crop agitation member (11) being located so that it projects from a respective step (9).

9. A combine harvester provided with a grain separating mechanism as claimed in any one of claims 1 to 8.

## Revendications

1. Mécanisme de séparation de grains utilisable dans une moissonneuse-batteuse comprenant une pluralité d'éléments de support de la récolte s'étendant longitudinalement, qui sont pourvus le long de leurs bords supérieurs de formations de venue en contact avec la récolte et oscillent longitudinalement pour acheminer la récolte vers l'arrière sur leur longueur, et une pluralité d'éléments allongés d'agitation de la récolte, reliés chacun aux éléments de support de la récolte de manière à dépasser longitudinalement desdits éléments sous la récolte, ledit mécanisme étant caractérisé en ce que chaque élément d'agitation (11) de la récolte est relié rigidement à un élément de support de la récolte (4) et est élastique de manière à résonner par un mouvement latéral à l'oscillation longitudinale des éléments de support de la récolte (4).

2. Mécanisme de séparation de grains suivant la revendication 1 caractérisé en outre en ce que chaque élément d'agitation de la récolte (11) comprend un élément constitué par une feuille élastique qui est fixée par une extrémité aux éléments de support de la récolte (4) de façon que le mouvement latéral précité soit perpendiculaire aux faces latérales de l'élément en feuille (11).

3. Mécanisme de séparation de grains suivant la revendication 2, caractérisé en outre en ce que l'un des bords longitudinaux de l'élément en feuille (11) est situé en haut de sorte que le mouvement latéral précité comporte au moins une composante horizontale.

4. Mécanisme de séparation de grains suivant la revendication 3, caractérisé en outre en ce que l'élément en feuille (11) s'étend dans un plan incliné par rapport à la verticale d'un angle de moins de 45°.

5. Mécanisme de séparation de grains suivant l'une quelconque des revendications 2 à 4, caractérisé en outre en ce que l'extrémité libre de l'élément élastique en feuille (11) est chargé (12), ce qui augmente la résonance.

6. Mécanisme de séparation de grains suivant l'une quelconque des revendications précédentes, caractérisé en outre en ce qu'on détermine la fréquence naturelle d'oscillation de chacun des éléments d'agitation de la récolte (11) de façon qu'elle soit légèrement plus élevée que la fréquence d'oscillation des éléments de support de la récolte (4), de manière que les deux fréquences coincident plus étroitement lorsque le mécanisme est chargé avec la récolte.

7. Mécanisme de séparation de grains suivant l'une quelconque des revendications précédentes, caractérisé en outre en ce que chaque élément d'agitation de la récolte (11) présente sur son bord supérieur des formations (8, 9) qui contribuent à l'acheminement vers l'arrière de la récolte quand il oscille longitudinalement.

8. Mécanisme de séparation de grains suivant l'une quelconque des revendications précédentes, caractérisé en outre en ce que l'un ou plusieurs des éléments de support de la récolte (4) comprend sur sa longueur un ou plusieurs gradins (9) de sorte que la récolte tombe sur chaque gradin lors de son acheminement vers l'arrière, chaque élément d'agitation de la récolte (11) étant disposé de manière à dépasser d'un gradin respectif (9).

9. Moissonneuse-batteuse équipée d'un mécanisme de séparation de grains suivant l'une quelconque des revendications 1 à 8.

Patentansprüche

1. Korntrenneinrichtung für die Verwendung in Mähdreschern mit einer Anzahl sich längs erstreckender Förderglieder für das Erntegut, die an ihrem Oberrand mit in das Erntegut hineingreifenden Einrichtungen versehen sind und die in Längsrichtung hin- und herschwingen, um das Erntegut über ihre Länge hinweg nach rückwärts zu befördern und mit einer Anzahl längs ausgebildeter Schüttelglieder, welche jeweils mit den Fördergliedern so verbunden sind, daß sie in Längsrichtung unter das Erntegut reichen, dadurch gekennzeichnet, daß jedes Schüttelglied (11) für das Erntegut fest mit einem Förderglied (4) verbunden ist und derart federt, daß es in Abhängigkeit von der Längsschwingung des Fördergliedes (4) für das Erntegut eine seitliche Resonanzbewegung durchführt.

2. Korntrenneinrichtung nach Anspruch 1, dadurch gekennzeichnet, daß jedes Schüttelglied (11) ein Federblatt aufweist, welches an einem Ende der Förderglieder (4) derart befestigt ist, daß die seitliche Bewegung normal zu den Seitenflächen des Federblattes (11) erfolgt.

3. Korntrenneinrichtung nach Anspruch 2, dadurch gekennzeichnet, daß eine Längskante des Federblattes (11) derart hochgelagert ist, daß die seitliche Bewegung mindestens eine horizontale Komponente aufweist.

4. Korntrenneinrichtung nach Anspruch 3, dadurch gekennzeichnet, daß das Federblatt (11) in einer Ebene liegt, die von der Vertikalen um weniger als 45° geneigt ist.

5. Korntrenneinrichtung nach einem der Ansprüche 2 bis 4, dadurch gekennzeichnet, daß das freie Ende des Federblattes (11) belastet (12) ist, um die besagte Resonanz zu erhöhen.

6. Korntrenneinrichtung nach einem der vorausgehenden Ansprüche, dadurch gekennzeichnet, daß die Eigenfrequenz jedes der Schüttelglieder (11) geringfügig höher liegt als die Schwingfrequenz der Förderglieder (4), so daß die beiden Frequenzen besser in Übereinstimmung kommen, wenn die Vorrichtung mit Erntegut beladen ist.

7. Korntrenneinrichtung nach einem der vorausgehenden Ansprüche, dadurch gekennzeichnet, daß jedes Schüttelglied (11) längs ihrer Oberkante mit einer Einrichtung (8, 9) versehen ist, die die Rückwärtsbewegung des Erntegutes bei der Längsschwingung unterstützt.

8. Korntrenneinrichtung nach einem der vorausgehenden Ansprüche, dadurch gekennzeichnet, daß ein oder mehrere Förderglieder (4) über ihre Länge mit einer oder mehreren Stufen (9) versehen ist, so daß das Erntegut bei der Rückwärtsbewegung über jede Stufe fällt, wobei die Schüttelglieder (11) so angeordnet sind, daß sie von einer entsprechenden Stufe (9) hervorragen.

9. Ein Mähdrescher, der mit der Korntrenneinrichtung versehen ist, wie sie in den Ansprüchen 1 bis 8 beansprucht wurde.

FIG.1

FIG.2

FIG.3